# EUROPÄISCHE PATENTSCHRIFT

(11) **EP 3 606 744 B1**
(45) Veröffentlichungstag und Bekanntmachung des Hinweises auf die Patenterteilung: **03.03.2021**
(21) Anmeldenummer: 18713265.9
(22) Anmeldetag: 29.03.2018
(51) Int. Cl.: B32B 5/26, D03D 15/00, D03D 15/02, B29C 70/22

(54) **VERFAHREN ZUR HERSTELLUNG EINES TEXTILEN UNIDIREKTIONALGEWEBES**
METHOD FOR PRODUCING A TEXTILE UNIDIRECTIONAL FABRIC
PROCÉDÉ DE FABRICATION D'UN TISSU UNIDIRECTIONNEL

(30) Priorität: 03.04.2017 EP 17164528; 01.12.2017 JP 2017231749
(43) Veröffentlichungstag der Anmeldung: 12.02.2020
(73) Patentinhaber: Teijin Carbon Europe GmbH, 42103 Wuppertal (DE); Teijin Limited, Osaka-shi Osaka 530-0005 (JP)
(72) Erfinder: WOCKATZ, Ronny, 91315 Höchstadt (DE); ORTMANNS, Dirk, 41844 Wegberg (DE); YOSHIDA, Shuhei, Osaka-shi OSAKA (JP); NAKAMURA, Yosuke, Osaka-shi OSAKA (JP); YOSHIKAWA, Hidekazu, Osaka-shi OSAKA (JP)
(74) Vertreter: CPW GmbH
(86) Internationale Anmeldenummer: PCT/EP2018/058128
(87) Internationale Veröffentlichungsnummer: WO 2018/184992

(56) Entgegenhaltungen:
- EP-A1- 1 125 728
- EP-A2- 1 473 132
- WO-A1-2006/111037
- US-A- 4 680 213
- US-A- 5 212 010

## Beschreibung

Die Erfindung betrifft ein Verfahren zur Herstellung eines textilen Unidirektionalgewebes (auch nur Unidirektionalgewebe genannt) aus Verstärkungsfasern, sowie einen Faservorformling zur Herstellung von Verbundwerkstoffbauteilen, wobei der Faservorformling aus dem Unidirektionalgewebe hergestellt wurde.

Bei der Erfindung handelt es sich um eine Weiterentwicklung einer Erfindung, die in der internationalen Anmeldung PCT/EP 2016/070959 beschrieben wird.

Gelege aus Verstärkungsfasern oder -garnen, insbesondere auch in Form unidirektionaler Gewebe, sind seit langem auf dem Markt bekannt. Diese Gelege oder unidirektionalen Gewebe werden vielfach eingesetzt, um Verbundwerkstoff-Bauteile mit z.T. komplexen Strukturen herzustellen. Dabei werden zur Herstellung solcher Verbundwerkstoff-Bauteile in einem Zwischenschritt zunächst aus Gelegen oder unidirektionalen Geweben sogenannte Faservorformlinge ("Preforms") hergestellt, bei denen es sich um textile Halbzeuge in Form von zwei- oder dreidimensionalen Gebilden aus Verstärkungsfasern handelt, deren Form bereits nahezu der Form des endgültigen Bauteils entsprechen kann. Bei Ausführungsformen solcher Faservorformlinge, die im Wesentlichen nur aus den Verstärkungsfasern bestehen und bei denen der für die Bauteilherstellung erforderliche Matrixanteil noch zumindest weitgehend fehlt, wird in weiteren Schritten ein geeignetes Matrixmaterial über Infusion oder Injektion, auch unter Anwendung von Vakuum, in den Faservorformling eingebracht. Abschließend erfolgt eine Aushärtung des Matrixmaterials bei in der Regel erhöhten Temperaturen und Drücken zum fertigen Bauteil. Bekannte Verfahren zur Infusion oder Injektion des Matrixmaterials sind hier das sogenannte Liquid Molding (LM-Verfahren) oder damit verwandte Verfahren wie z.B. Resin Transfer Molding (RTM), Vacuum Assisted Resin Transfer Molding (VARTM), Resin Film Infusion (RFI), Liquid Resin Infusion (LRI) oder Resin Infusion Flexible Tooling (RIFT).

Zur Herstellung der Faservorformlinge können die Gelege oder unidirektionalen Gewebe ohne Matrixmaterial in eine an die Bauteilkontur angepasste Form in mehreren Lagen übereinander gelegt werden, bis die gewünschte Dicke erreicht ist. In anderen Fällen können zunächst mehrere Lagen von Gelegen oder Geweben übereinander angeordnet und zu einem trockenen Multiaxialgelege z.B. mittels Nähfäden miteinander verbunden werden. Die Verstärkungsfasern der einzelnen Lagen können zueinander parallel oder auch wechselweise kreuzend ausgerichtet sein. Üblicherweise werden bei Multiaxialgelegen Winkel von 0°, 90°, plus oder minus 25°, plus oder minus 30°, plus oder minus 45° oder plus oder minus 60° eingestellt und der Aufbau so gewählt, dass sich gegenüber der NullGrad Richtung so ein symmetrischer Aufbau ergibt. Diese Multiaxialgelege lassen sich dann in einfacher Weise zu Preformen weiterverarbeiten.

Vielfach weisen Multiaxialgelege eine bei relativ niedrigen Temperaturen schmelzende thermoplastische Polymerkomponente z.B. in Gestalt der Nähfäden oder in Gestalt eines zusätzlich auf die Multifilamentverstärkungsgarne aufgebrachten Polymermaterials auf. Zur Ausbildung der Preform kann damit durch Aufschmelzen dieser Polymerkomponente und anschließendes Abkühlen der Preform Halt vermittelt werden, die Preform also stabilisiert werden.

Die Verwendung von Gelegen aus zueinander parallel nebeneinander angeordneten Multifilamentverstärkungsgarnen bzw. von unidirektionalen Geweben ermöglicht die Herstellung von Faserverbund-Bauteilen, bei denen eine gezielte Anpassung an die in der Anwendung auf das Bauteil wirkenden Beanspruchungen und somit hohe Festigkeiten in den jeweiligen Beanspruchungsrichtungen. Dabei können bei Verwendung von Multiaxialgelegen oder mehrerer Lagen Unidirektionalgeweben durch Anpassung hinsichtlich der Faserdichten und Faserwinkel an die im Bauteil vorliegenden Belastungsrichtungen geringe spezifische Gewichte realisiert werden.

Für die Herstellung der Preformen ist es wichtig, dass die dabei verwendeten Ausgangsmaterialien, wie die Gelege aus zueinander parallel nebeneinander angeordneten Multifilamentverstärkungsgarnen oder die unidirektionalen Gewebe oder aber auch die daraus hergestellten Multiaxialgelege, hinreichende Stabilitäten und Verformbarkeiten aufweisen, um so eine gute Handhabbarkeit und Drapierfähigkeit zu gewährleisten.

In Dokument US 4,680,213 ist ein Textil beschrieben, das aus Verstärkungsfasern besteht und so geformt ist, dass eine gute Permeabilität gewährleistet werden kann. Dazu werden unidirektional ausgerichtete Verstärkungsfasern mit sogenannten Bindefasern klebend verbunden. Die Bindefasern halten die Verstärkungsfasern auf Abstand zueinander. Durch diese Abstände entstehen Lücken in dem Textil, die von wenigen Millimetern bis zu fünf Millimeter groß sein können. Mittels dieser Lücken entsteht eine Permeabilität im Textil. Die Bindefasern können aus einem schmelzbaren Material (beispielsweise Polyester) bestehen oder beispielsweise eine Kern-Mantel-Struktur (hochfestes Fasermaterial, ummantelt beispielsweise mit Polyester) aufweisen. In der US 4,680.213 werden die Bindefasern sowohl in Kettrichtung als auch in Schussrichtung eingesetzt, so dass das entstehende Textil durch die Verklebung eine schlechte Drapierfähigkeit aufweist. Die Verstärkungsfasern der genannten Schrift bilden keine flächige Lage aus nebeneinander anliegend angeordneten Multifilamentverstärkungsgarnen aus, weswegen die Festigkeit des Textils durch die Lücken verringert wird. Zudem wird in der Schrift kein Permeabilitätsbereich genannt. Die Einstellung eines Permeabilitätsbereichs wäre bei dem Textil der genannten Schrift zudem kaum möglich, da die Lücken im Textil immer über die gesamte Faserlänge verlaufen und so immer eine hohe Permeabilität entsteht.

Aus der EP 1 125 728 sind Verstärkungsfasermaterialien mit einem zusätzlichen Vlies bekannt, wobei das Material eine sehr gute Drapierfähigkeit haben soll. Aus Figur 3 ist ersichtlich, dass Hilfsgarne 5 durch die Lagen aus Verstärkungsfasermaterial gewebt werden. In Abschnitt [0024] der EP 1 125 728 wird beschrieben, dass die Verstärkungsfasergarne parallel zueinander in einem Intervall von 0.1 bis 5 mm angeordnet werden, um die Durchlässigkeit eines Harzes zu verbessern und damit die Imprägnierung zu vereinfachen. Eine Permeabilität wird folglich auch hier durch im Textil vorgesehene Lücken zwischen den Verstärkungsfasergarnen erreicht (und durch die Vernadelung mit dem Vlies). Ein Permeabilitätsbereich wird in dieser Schrift nicht offenbart. Auch wird in der Schrift nicht offenbart, dass die Hilfsgarne eine Kern-Mantel-Struktur aufweisen oder einen Titer im Bereich von 10 bis 40 tex haben.

Die bessere Imprägnierbarkeit der Textile der US 4,680,213 und der EP 1 125 728 wird folglich durch Lücken in den Faserlagen erreicht, die in Richtung der Fasern verlaufen. Folglich entstehen in jeder Faserlage Lücken über die gesamte Länge der Fasern. Die aus dem Textil hergestellten Bauteile weisen damit in der Regel Bereiche ohne Verstärkungsfasermaterial (harzreiche Zonen) auf, die die Festigkeit negativ beeinflussen. Insbesondere die Einstellung von geringen Permeabilitätsbereichen (10 bis 40 l/dm²/min) erscheint mit solchen Textilen nicht möglich.

In der EP 1 352 118 A1 werden multiaxiale Gelege offenbart, bei denen die Lagen der Verstärkungsfasern mittels schmelzbarer Nähgarne zusammengehalten werden, die eine gute Verformbarkeit der multiaxialen Gelege oberhalb der Schmelztemperatur der Nähfäden und bei anschließender Abkühlung eine Stabilisierung der Form ermöglichen. Häufig werden Nähfäden aus thermoplastischen Polymeren wie z.B. Polyamid oder Polyester eingesetzt, wie beispielsweise in der EP 1 057 605 offenbart.

In der US 2005/0164578 wird ein Vorprodukt für einen Verbundwerkstoff-Vorformling (Preform) beschrieben, das mindestens eine Lage aus einem Verstärkungsfasergewebe aufweist und bei dem in mindestens einer der Lagen Fasern integriert sind, die die Preform stabilisieren, wenn diese erhöhten Temperaturen ausgesetzt werden, und die sich im späteren in dem zur Herstellung des Verbundbauteils eingesetzten Matrixharz lösen. Auch die WO 02/16481 offenbart Strukturen aus Verstärkungsfasern z.B. für Preformen, wobei die Strukturen flexible Polymerelemente enthalten, die z.B. in Gestalt von Fasern zwischen die Verstärkungsfasern eingebracht sind oder als Nähfäden die Verstärkungsfasern miteinander verbinden. Die flexiblen Polymerelemente bestehen aus einem Material, welches in dem eingesetzten härtbaren Matrixmaterial löslich ist.

Gemäß der DE 198 09 264 A1 können zwischen die miteinander vernähten Lagen aus Verstärkungsfasern der dort offenbarten Fasergelegeanordnungen für Faservorformlinge Klebevliese aus thermoplastischen Polymeren eingelegt werden. Durch diese Schmelzklebevliese lassen sich bei Erwärmung über die Schmelztemperatur des diese Vliese aufbauenden Polymers die Fasergelegeanordnungen auf einfache Weise in dreidimensionale Strukturen verformen, die nach Abkühlung praktisch ohne Rückstellkräfte ihre Form behalten.

Die EP 1 473 132 hat Multiaxialgelege bzw. ein Verfahren zur Herstellung dieser Multiaxialgelege sowie aus den Multiaxialgelegen hergestellte Preformen zum Gegenstand. Die dortigen Multiaxialgelege weisen zwischen den Lagen aus unidirektional verlegten Verstärkungsfasern Zwischenlagen aus thermoplastischen Fasern auf, wobei die Zwischenlagen Vliese aus Bikomponentenfasern oder Hybridvliese aus miteinander vermischten unterschiedlichen Fasern sein können. Das die Zwischenlagen aufbauende Polymer soll kompatibel mit dem später in die Preform injizierten Matrixharz sein. Insbesondere wird ausgeführt, dass die Zwischenlagen permeabel für das Matrixharz bei der Harzinfusion sein sollen und die Verstärkungslagen während der Harzinfusion und danach fixieren sollen. Im Falle der Verwendung von Epoxidharzen sind die Vliese aus Polyamidfasern aufgebaut. Die Vliese können mit den Lagen aus Verstärkungsfasern über Wirkmaschen verbunden sein oder über Schmelzklebung.

Die EP 1 705 269 offenbart ein thermoplastisches Fasermaterial aus einem Polyhydroxyether, welches z.B. bei multiaxialen Gelegen aus Verstärkungsfasern z.B. als Non-Woven zwischen die Lagen aus Verstärkungsfasern eingelegt werden kann. Unter Wärmeeinfluss wird das Polyhydroxyether-Material viskos und klebrig, so dass eine Fixierung der Verstärkungsfasern in einer definierten geometrischen Anordnung vor ihrer Einbettung in der Matrix erreicht werden kann. Das Polyhydroxyether-Fasermaterial löst sich dann später bei einer Temperatur oberhalb seiner Glasumwandlungstemperatur vollständig im Matrixmaterial auf.

In der US 2006/0252334 werden Gelege aus mehreren Lagen von Verstärkungsfasern beschrieben, die zur Verbesserung der Schlagzähigkeit der aus diesen Gelegen hergestellten Bauteile zwischen den Verstärkungslagen z.B. Vliese aus polymeren Fasern enthalten. Dabei sollen diese polymeren Fasern im Matrixharz löslich sein, wodurch nach den Ausführungen der US 2006/0252334 eine im Vergleich zu schmelzbaren, unlöslichen Thermoplasten gleichmäßigere Verteilung des diese Fasern aufbauenden Polymers in die Harzmatrix ermöglicht wird.

Da die polymeren Fasern bei den Gelegen der US 2006/0252334 und der EP 1 705 269 im Matrixmaterial löslich sind und sich demzufolge während der Infiltration der Gelege mit Matrixharz auflösen, ist eine sichere Fixierung der Verstärkungslagen in diesem Stadium der Bauteilherstellung nicht hinreichend gewährleistet.

Es werden in der Patentliteratur auch Substrate in Gestalt von einlagigen Gelegen aus zueinander parallel nebeneinander angeordneten Multifilamentverstärkungsgarnen oder einlagigen unidirektionalen Geweben beschrieben, die für die Herstellung von Faservorformlingen geeignet sind. So beschreibt die EP 1 408 152 ein Substrat in Gestalt eines unidirektionalen Gewebes, bei denen zueinander unidirektional und parallel nebeneinander angeordnete Multifilamentverstärkungsgarne durch quer zu den Multifilamentverstärkungsgarnen verlaufende Hilfsfäden verwoben sind. Die Hilfsfäden können Kohlenstofffasern, Glasfasern, organische Fasern wie z.B. Aramid-, Polyamid-, PBO-, PVA oder Polyethylenfasern sein. Die Substrate der EP 1 408 152 können auch eine adhäsive Komponente aufweisen z.B. aus einem Nylon oder einem Polyester oder aus einem aushärtbaren Harz wie z.B. einem Epoxid-, einem Phenol- oder einem ungesättigten Polyesterharz. An den Multifilamentgarnen der Unidirektionalgewebe haften des Weiteren eine erste und eine zweite Harzkomponente. Die zweite Harzkomponente weist eine höhere Schmelztemperatur oder Fließbeginntemperatur auf als die erste Harzkomponente.

Die EP 2 233 625 offenbart Substrate in Gestalt von einlagigen Gelegen aus nebeneinander angeordneten Verstärkungsfasergarnen, die eine bogenförmige Kontur haben, wobei die Verstärkungsfasergarne durch Hilfsfäden, die als Schussfäden die Verstärkungsfasergarne kreuzen, zusammen gehalten werden. Als Hilfsfäden werden vorzugsweise Nylon- oder Glasfäden eingesetzt, wobei Glasfäden besonders bevorzugt eingesetzt werden, da sie nicht schrumpfen. Zur Stabilisierung der gebogenen Form kann ein Harzmaterial, dessen Hauptkomponente ein thermoplastisches Polymer ist, in Punktform, in linearer Form, in diskontinuierlicher Form oder in Form eines Vlieses auf das Substrat aufgebracht und mit diesem klebend verbunden sein.

Wenngleich die EP 2 233 625 bereits Substrate zur Verfügung stellt, die über einen Zusammenhalt verfügen und auch bei bogenförmigen Konturen eine gute Stabilität aufweisen, besteht dennoch Bedarf nach Substraten mit verbesserter Stabilität und gleichzeitig hoher Drapierfähigkeit, die einem automatisierten Herstellungsverfahren und einer automatisierten Verarbeitung zu Preformen zugänglich sind.

Es besteht weiterhin ein Bedarf an Herstellungsverfahren von Unidirektionalgeweben, die eine verbesserte Stabilität und gleichzeitig hohe Drapierfähigkeit aufweisen und die besonders gut geeignet sind für automatisierte Herstellungsverfahren.

Der vorliegenden Erfindung liegt daher die Aufgabe zu Grunde, ein Verfahren zur Verfügung zu stellen, mit dem textile Unidirektionalgewebe hergestellt werden können, die eine gute Formstabilität nach der Umformung zu Preformen sowie eine gute und einstellbare Durchlässigkeit (Permeabilität) bei der Infiltration von Matrixharzen aufweisen. Gleichzeitig sollen die aus dem textilen Unidirektionalgewebe hergestellten Bauteile hohe Festigkeitskennwerte insbesondere unter Druckbeaufschlagung und eine hohe Schlagzähigkeit besitzen.

Die Aufgabe wird gelöst durch ein Verfahren zur Herstellung eines textilen Unidirektionalgewebes wobei mindestens eine flächige Lage aus zueinander parallel nebeneinander angeordneten Multifilamentverstärkungsgarnen über Querfäden miteinander verwebt werden, wobei als Querfäden Querfäden mit einer Kern-Mantel-Struktur verwendet werden, wobei die Querfäden eine den Mantel aufbauende erste Komponente und eine den Kern aufbauende zweite Komponente aufweisen, wobei die erste Komponente eine niedrigere Schmelztemperatur aufweist als die zweite Komponente, die erste Komponente ein schmelzbares thermoplastisches Polymermaterial ist und über die erste Komponente der Querfäden die nebeneinander angeordneten Multifilamentverstärkungsgarne durch Schmelzklebung miteinander verbunden werden, wobei die Querfäden einen Titer von 10 bis 40 tex, gemessen nach EN ISO 2060:1995 haben und durch die Verwebung der Querfäden mit den Multifilamentverstärkungsgarnen innerhalb der flächigen Lage aus nebeneinander angeordneten Multifilamentverstärkungsgarnen Gassen gebildet werden, durch die eine Permeabilität von 10 bis 600 l/dm²/min, gemessen nach EN ISO 9237, einstellbar wird.

Unter einer flächigen Lage aus zueinander parallel nebeneinander angeordneten Multifilamentverstärkungsgarnen soll eine Lage aus Multifilamentverstärkungsgarnen verstanden werden, deren benachbarter Garne innerhalb einer Lage überwiegend miteinander in einem direkten Kontakt stehen. Bei einer solchen Lage ergibt sich ein flächiges Fadenbild ohne große Lücken entlang der Faserausrichtung. Lücken beziehungsweise Gassen entstehen lediglich nur sehr lokal an Kreuzungspunkten zwischen Multifilamentverstärkungsgarn und Querfaden durch die Verwebung. Eine Mehrzahl dieser Lücken können (wenn das für die Permeabilität gewünscht ist) zu einer großen Gasse zusammenlaufend ausgestaltet werden.

Durch die Wahl der Feinheit des Querfadens können diese Lücken beziehungsweise Gassen in der Größe beeinflusst werden, so dass zusammen mit der Art der Verwebung des Querfadens dann die Permeabilität des Unidirektionalgewebes eistellbar wird. In vorteilhafterweise kann hierdurch die Imprägnierbarkeit des Unidirektionalgewebes eingestellt werden, ohne dass die Festigkeit des Textils (und des späteren Bauteils) gemindert oder die Drapierfähigkeit herabgesetzt wird.

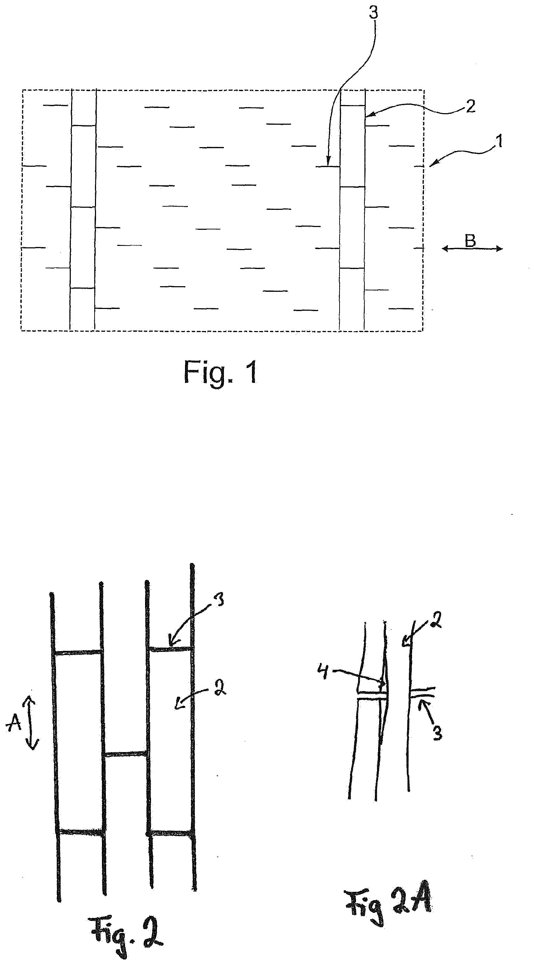

Die in dem Verfahren entstehenden Gassen entstehen lokal durch die Verwebung des Querfadens mit dem Multifilamentverstärkungsgarnen wie Figur 2 A verdeutlicht. Die Gassen können auch als Lücken oder Durchlässe bezeichnet werden.

Vorzugsweise wird auf der mindestens einen Lage der Multifilamentverstärkungsgarne ein Vlies aus thermoplastischen Polymermaterial angeordnet, dass mit der flächigen Lage der Multifilamentverstärkungsgarnen klebend verbunden wird. Vorzugsweise erfolgt die Verklebung des Vlieses mit der flächigen Lage der Multifilamentverstärkungsgarnen durch die Querfäden. Das heißt, die erste Komponente der Querfäden klebt das Vlies auf die Lage der Multifilamentverstärkungsgarne (verwebt mit den Querfäden) durch schmelzkleben.

Die Permeabilität kann (unter anderem) durch eine gezielte Verwebung der Querfäden mit den Multifilamentverstärkungsgarnen eingestellt werden. Unter einer gezielten Verwebung soll dabei verstanden werden, wenn die Verwebung nicht hauptsächlich die Verbindung der Querfäden mit den Multifilamentverstärkungsgarnen als Ziel hat.

Das beschriebene Verfahren zur Herstellung eines Unidirektionalgewebes ist neu gegenüber der Ursprungserfindung, beschrieben in der internationalen Anmeldung PCT/EP/2016/070959. In der Ursprungsanmeldung konnte das textile Substrat zwar auch in Form eines Unidirektionalgewebes vorliegen, jedoch konnte keine Permeabilität eingestellt werden. Mit einer Verwebung der Querfäden mit den Multifilamentverstärkungsgarnen, wie in der Ursprungsanmeldung beschrieben, sollte lediglich eine Verbindung zwischen den Multifilamentverstärkungsgarnen und den Querfäden erreicht werden. Hierzu führt die Ursprungsanmeldung auch aus, dass die Querfäden mit den Multifilamentverstärkungsgarnen zusätzlich verklebt werden. Eine richtige Einwebung oder Verwebung der Querfäden, die zu einer einstellbaren Permeabilität geführt hätten, liegt nicht vor. Folglich beschreibt die Ursprungsanmeldung auch kein Unidirektionalgewebe mit einer Permeabilität im Bereich von 10 bis 600 l/dm²/min. Es soll dabei klargestellt werden, dass der beanspruchte Permeabilitätsbereich nicht einfach dadurch entsteht, dass die Querfäden mit den Multifilamentverstärkungsgarnen befestigt werden. Vielmehr ist der beanspruchte Permeabilitätsbereich eine Folge der gezielten Verwebung der Querfäden mit den Multifilamentverstärkungsgarnen und der gezielten Auswahl des Titerbereichs der Querfäden mit einer Kern-Mantel-Struktur, die über eine bloße Befestigung der Querfäden mit den Multifilamentverstärkungsgarnen hinausgeht.

Die durch das erfindungsgemäße Verfahren hergestellten Unidirektionalgewebe weisen eine (einstellbare) Permeabilität auf und sind somit besonders vorteilhaft an nachfolgende Weiterverarbeitungsverfahren anpassbar. Wird beispielsweise das Unidirektionalgewebe zur Herstellung großer Bauteile vorgesehen, werden ein oder mehrere dieser Unidirektionalgewebe mit einem Matrixsystem zu einer Preform zusammengefasst. Dafür wird eins oder mehrere der Unidirektionalgewebe in eine sogenannte Preform eingelegt und beispielsweise durch ein Vacuum Assistance Process (VAP), einem Modified Vacuum Infusion process MVI oder einem Vacuum Assistance Resin Infusion Process (VaRTM) mittels eines Matrixmaterials zu einer Preform geformt. Die beschriebenen Verfahren sind dabei nur aufgrund der einstellbaren Permeabilität des Unidirektionalgewebes verwendbar. Im VAP Verfahren beispielsweise bewirkt die Permeabilität des Unidirektionalgewebes, dass mithilfe von Unterdruck Luft- und Gaseinschlüsse entweichen können und eine Infiltration des Unidirektionalgewebes mit einem Matrixsystem vollständig und ohne Schwachstellen in der späteren Preform erfolgt. Es versteht sich, dass je nach gewählten Matrixsystem und Unidirektionalgewebe und auch je nach späterer Anforderung an das Unidirektionalgewebe unterschiedliche Permeabilitäten des Unidirektionalgewebes gewünscht sind. Bei der Verwendung eines stark flüssigen Matrixmaterials beispielsweise kann die Permeabilität des Unidirektionalgewebes bewusst gering eingestellt werden, um beispielsweise eine gewollt langsamere Durchdringung der Unidirektionalgewebe mit Matrixmaterial zu erreichen. Unter einer geringen Permeabilität soll eine Permeabilität im Bereich 10 bis 40 l/dm²/min gelten. Bei Unidirektionalgeweben mit einer geringen Permeabilität kann im Herstellungsprozess Luft und Gas über einen längeren Zeitraum entweichen. Insbesondere bei Herstellungsverfahren ohne Membran zur Gasabsaugung, ist damit die Gefahr von Fehlstellen (Stellen ohne Matrixmaterial) bei einem mit dem Unidirektionalgewebe hergestellten Faserformling verringert.

Eine mittlere Permeabilität liegt im Bereich von 40- bis 80 l/dm²/min und unter einer hohen Permeabilität soll eine Permeabilität über 80 l/dm²/min, besonders bevorzugt von über 100 l/dm²/min verstanden werden.

Mittels einer hoch eingestellten Permeabilität kann vorteilhafterweise die Infusionszeit um den Faktor 6 bis 15 verkürzt werden, was eine Einsparung bei der Herstellung von Preformen im Stundenbereich bedeutet.

Weiterhin beeinflusst die einstellbare Permeabilität auch die Fließwege bei der Herstellung von Preformen. Bei einer hohen Permeabilität beispielsweise können Hilfsmaterialien wie Fließhilfen oder Kanäle im Aufbau reduziert oder sogar ganz weggelassen werden.

Vorzugsweise kann bei dem Unidirektionalgewebe eine Permeabilität von 25 bis 600 l/dm²/min, besonders bevorzugt von 50 bis 600 l/dm²/min durch die Verwebung der Multifilamentverstärkungsgarnen mit den Querfäden eingestellt werden.

Weiterhin bevorzugt bilden sich die Gassen im Wesentlichen lediglich an dem Bindungspunkt von Multifilamentverstärkungsgarn und Querfaden. Es entstehen folglich nur lokal sehr begrenzte einzelne Gassen, die sich im Wesentlichen nicht in Richtung der Garnerstreckungsrichtung hin ausdehnen und beispielsweise über die ganze Garnlänge vorliegen. Je nach einzustellender Permeabilität kann jedoch die Verwebung des Querfadens so gewählt werden, dass eine große durchgehende Gasse, die sich über die Garnlänge erstreckt, entsteht. Durch lokal begrenzte (nicht durchgehende Gassen) entstehen keine in Garnerstreckungsrichtung liegenden garnfreien Bereiche, die sich in Garnerstreckungsrichtung über die gesamte (oder lange Abschnitte der) Garnlänge in Garnerstreckungsrichtung ausdehnen. Solche Bereiche sind im Stand der Technik im späteren Bauteil verstärkungsgarnfrei und weisen nur Matrixmaterial auf, wodurch sich die Festigkeit verringern kann.

Die mindestens eine flächige Lage aus zueinander parallel nebeneinander angeordneten Multifilamentverstärkungsgarnen bilden (ohne die Verwebung mit den Querfäden) ein unidirektionales Gelege. Im Rahmen der vorliegenden Erfindung wird dabei unter einem unidirektionalen Gelege eine Anordnung von mindestens einer ebenen flächigen Lage aus zueinander parallel nebeneinander angeordneten Multifilamentverstärkungsgarnen verstanden, bei der alle Verstärkungsgarne in eine Richtung orientiert sind. Durch die Verwebung der Querfäden in die Lage aus Multifilamentverstarkungsgarnen entsteht ein Unidirektionalgewebe. Im Sinne der Erfindung soll klar sein, dass ein unidirektionales Gewebe ein Unidirektionalgewebe ist.

Die zueinander parallel nebeneinander angeordneten Multifilamentverstärkungsgarne sind zur Bildung des Unidirektionalgewebes über die Querfäden miteinander verwoben und gleichzeitig mit den Querfäden über Schmelzklebung verbunden . Bei diesen Unidirektionalgeweben sind also die die jeweilige Lage aufbauenden, parallel zueinander nebeneinander angeordneten Verstärkungsgarne durch Ketten aus lockeren Bindefäden (Querfäden), die sich im Wesentlichen quer zu den Verstärkungsgarnen erstrecken, miteinander verbunden. Derartige Unidirektionalgewebe werden beispielsweise in der EP 0 193 479 B1, der EP 0 672 776 oder der EP 2 233 625 beschrieben. Bevorzugt weist das unidirektionale Gelege aus Multifilamentverstärkungsgarnen eine einzelne flächige Lage aus zueinander parallel nebeneinander angeordneten Multifilamentverstärkungsgarnen auf.

Die mittels des Verfahrens hergestellten Unidirektionalgewebe besitzen eine hohe Stabilität gegenüber einem Verschieben der Verstärkungsgarne gegeneinander sowohl in Erstreckungsrichtung der Verstärkungsgarne als auch quer dazu. Dies ist zum einen darauf zurückzuführen, dass in einem Ausführungsbeispiel das Vlies aus thermoplastischem Polymermaterial klebend mit der Lage der Multifilamentverstärkungsgarne verbunden ist. Zum anderen bewirken die Querfäden mit Kern-Mantel-Struktur eine weitere Stabilisierung, da die den Mantel aufbauende erste Komponente aus einem schmelzbaren thermoplastischen Polymermaterial mit niedrigerem Schmelzpunkt gegenüber der den Kern aufbauenden zweiten Komponente bewirkt, dass die nebeneinander angeordneten Multifilamentverstärkungsgarne durch Schmelzklebung miteinander verbunden sind.

Gleichzeitig verleiht die höher schmelzende Kernkomponente dem Unidirektionalgewebe auch bei höheren Temperaturen, wie sie beispielsweise während der Härtung von Matrixharzen bei der Fertigung von Verbundwerkstoffbauteilen aus dem vorliegenden Unidirektionalgewebe vorkommen, eine ausreichende Querstabilität sowohl im Hinblick auf ein eventuelles Schrumpfen als auch im Hinblick auf eine eventuelle Längung.

Das vorliegende Unidirektionalgewebe lässt sich bestens zur Herstellung von Faservorformlingen einsetzen, indem eine oder mehrere Lagen des Unidirektionalgewebes entsprechend den Festigkeitserfordernissen des letztlich herzustellenden Verbundwerkstoff-Bauteils aufeinander gelegt und z.B. in eine Form eingebracht werden. Auf Grund der guten Drapierfähigkeit des vorliegenden Unidirektionalgewebes können dabei auch Faservorformlinge mit gebogenen Konturen hergestellt werden. Die aufeinander gelegten Lagen des Unidirektionalgewebes können dann beispielsweise durch kurzzeitige Temperaturerhöhung und anschließende Abkühlung über das Vlies oder auch über die Mantelkomponente der Querfäden miteinander verbunden, d.h. fixiert werden, so dass ein stabiler und handhabbarer Faservorformling erhalten wird.

Dem Fachmann ist klar, dass die Permeabilität durch verschiedene Faktoren einstellbar ist. Die Permeabilität im erfindungsgemäßen Verfahren wird vorzugsweise durch die Art der Bindung (Verwebung) zwischen den Multifilamentverstärkungsgarnen und dem ausgewählten Titer des Querfäden eingestellt. Besonders bevorzugt dabei ist, wenn die Querfäden zur Bildung des textilen Unidirektionalengewebes mit den Multifilamentverstärkungsgarnen in einer Köper- oder Leinwandbindung verwebt werden.

Vorzugsweise erfolgt die Verwebung der Querfäden mit den Multifilamentverstärkungsgarnen mittels einer Köperbindung 3/1 mit 0,6 bis 3 Fd/cm, vorzugsweise mit 0,8 Fd/cm, einer Köperbindung 3/1 mit 0,6 bis 3,0 Fd/cm, vorzugsweise mit 1,1Fd/cm, einer Köperbindung 2/1 mit 0,6 bis 3,0 Fd/cm, vorzugsweise mit 1,1 Fd/cm, einer Leinwandbindung 1/1 mit 0,6 bis 3,0 Fd/cm, vorzugsweise mit 1,1 Fd/cm und/oder einer Leinwandbindung 1/1 mit 0,6 bis 3,0 Fd/cm.

Bei der Herstellung des Unidirektionalgewebes ist es auch denkbar, dass das fertige Unidirektionalgewebe unterschiedliche Bindungstypen in unterschiedlichen Gewebebereichen aufweist. Dadurch kann das Unidirektionalgewebe beispielsweise Teilbereiche mit einer höheren und Teilbereiche mit einer niedrigeren Permeabilität aufweisen. Hierdurch kann beispielsweise die Durchdringungsgeschwindigkeit des Matrixsystems bei der Herstellung einer Preform aus dem Unidirektionalgewebe auch örtlich beeinflusst werden.

Neben der Art der Bindung zwischen den Querfäden und den Multifilamentverstärkungsgarnen kann auch der Garn- und/oder Fadenquerschnitt der Multifilamentverstärkungsgarne (in einem geringeren Maße) die Permeabilität des Unidirektionalgewebes beeinflussen. Bevorzugt liegen die Multifilamentverstärkungsgarne als Bändchengarne vor. Unter einem Bändchengarn soll dabei ein Garn verstanden werden, dessen Oberfläche quer zur Ausbereitungsrichtung des Garns wesentlich größer ist als dessen Dicke senkrecht zur Ausbreitungsrichtung des Garns. Die Querfäden liegen bevorzugt als Garne mit einem runden Querschnitt vor.

Vorzugsweise liegt der Titer des Querfadens im Bereich von 15 bis 35 tex, noch bevorzugter im Bereich 20 bis 25 tex, gemessen nach EN ISO 2060:1995.

Obwohl die Permeabilität durch verschiedene Faktoren beeinflusst werden kann, soll doch klargestellt werden, dass anscheinend die Art der Bindung (Verwebung) und der Titer des Querfadens die Permeabilität am stärksten beeinflussen. Anhand der Bindung sowie der Schussdichte im Unidirektionalgewebe wird die Gassenbildung im Unidirektionalgewebe beeinflusst. Das Unidirektionalgewebe wird quasi offener. Durch erhöhte Anzahl von Ober- und Unterfäden entstehen letztendlich viele kleine Gassen (Durchlässe oder Lücken) innerhalb des Unidirektionalgewebes, welche als Fließkanäle fungieren und so ein besseres Imprägnierverhalten ermöglichen. In bestimmten Fällen kann die Verwebung und der Titer des Querfadens auch so gewählt werden, dass die Mehrzahl von kleinen Gassen eine große Gasse bilden. In überraschender Weise kann folglich die Permeabilität über einen großen Bereich eingestellt und an die verschiedenen Anforderungen angepasst werden.

Überraschenderweise hat sich dabei weiterhin gezeigt, dass die Wahl eines Querfadens mit einem Titer größer als 40 tex das Unidirektionalgewebe negativ beeinflusst. Zum einem kommt es zu einer deutlichen Welligkeit des Fadenbildes der Lagen des Unidirektionalgewebes und zum anderen werden die Gassen auch in Querrichtung zur Fadenerstreckung ungewollt groß. Solche großen Gassen in Querrichtung führen zu harzreiche Zonen ohne Verstärkungsfasern quer zur Fadenrichtung im Bauteil (kann zu einem Festigkeitsverlust im späteren Bauteil führen).

Bei dem Verfahren zur Herstellung des Unidirektionalgewebes wird die Permeabilität des Unidirektionalgewebes umso höher, je dichter der Querfaden mit den Multifilamentverstärkungsgarnen verwebt wird. Das lässt sich dadurch erklären, dass jede Verwebung des Querfadens mit dem Multifilamentverstärkungsgarn zu einem Durchlass oder Lücke (Gasse) innerhalb des Unidirektionalgewebes an der Stelle (Bindungspunkt) führt, an der der Querfaden mit dem Multifilamentverstärkungsgarenen verwebt wurde. Der Querfaden verschiebt das Multifilamentverstärkungsgarn zur Entstehung der Gasse lokal minimal. Durch diesen Durchlass oder diese Lücke kann später das Matrixsystem durch das Unidirektionalgewebe fließen. Es entstehen die bereits beschriebenen Gassen. Je dichter folglich der Querfaden mit den Multifilamentverstärkungsgarnen verwebt wurde, desto mehr Gassen entstehen in dem Unidirektionalgewebe und desto höher ist die Permeabilität.

Auch der Titer des Querfadens beeinflusst jedoch die Permeabilität, da die Gassen größer werden, je größer der Titer des Querfadens gewählt wird. Dabei ist jedoch zu beachten, dass ein zu großer Titer (Titer größer als 40 tex) nicht nur zu einer großen Gasse führt, sondern eine unerwünschte Welligkeit der Garnlage der Multifilamentverstärkungsgarne bewirkt. Eine solche Welligkeit ist unerwünscht, da es die Festigkeit des Textils und die Handhabbarkeit verschlechtert. Zudem führen zu große Gassen zu garnfreien Bereichen innerhalb der Multifilamentverstärkungsgarnlage, die die Festigkeit des Unidirektionalgewebes und des späteren Bauteils (hergestellt aus dem Unidirektionalgewebe) negativ beeinflussen. Da in der vorliegenden Erfindung der Titer des Querfadens nicht über 40 tex liegen soll und zudem der Querfaden einen Kernmantelaufbau wie beansprucht aufweist, können die Gassen in der Regel auch bei einer dichten Verwebung und hoher Titerzahl des Querfadens im späteren Bauteil nicht zu verstärkungsfaserfreien Zonen führen oder solche Zonen klein gehalten werden. Das liegt daran, dass bei der Infiltrierung mit Matrixharz zur Bauteilfertigung die erste Komponente (mit einer niedrigen Schmelztemperatur) des Querfadens während der Infiltrierung schmilzt und so die Gasse nach einer bestimmten Prozesszeit der Matrixinfiltrierung wieder verkleinert.

Folglich ist die Permeabilität durch die Bindung (Verwebung) des Querfadens mit dem Multifilamentverstärkungsgarnen und dem gewählten Titer des Querfadens einstellbar, wobei für den Titer des Querfadens nur ein gezielt ausgewählter Bereich vorteilhaft erscheint und der Querfaden als Kern-Mantel-Garn vorliegen soll.

Wie ausgeführt weist die erste, den Mantel der Querfäden aufbauende Komponente eine niedrigere Schmelztemperatur auf als die den Kern aufbauende zweite Komponente. Vorzugsweise liegt die Schmelztemperatur der ersten Komponente der Querfäden im Bereich von 70 bis 150°C und besonders bevorzugt im Bereich von 80 bis 120°C. Die erste Komponente kann ein Polymer oder eine Polymermischung sein, deren Schmelztemperatur in diesem Bereich liegt. Besonders bevorzugt ist die erste Komponente ein Polyamidhomopolymer oder Polyamidcopolymer oder eine Mischung aus Polyamidhomopolymeren und/oder Polyamidcopolymeren. Von diesen Polymeren sind Polyamid 6, Polyamid 6.6, Polyamid 6.12, Polyamid 4.6, Polyamid 11, Polyamid 12 oder ein Polymer auf Basis Polyamid 6/12 bestens geeignet.

Ebenso ist bevorzugt, wenn die zweite Komponente der Querfäden eine Schmelztemperatur oberhalb von 200°C aufweist. Besonders bevorzugt ist die zweite Komponente ein Glas oder ein Polyester, da diese Materialien bei den bei der Verbundwerkstoff-Bauteilfertigung herrschenden Temperaturen einen geringen Schrumpf und eine geringe Dehnung aufweisen.

Im vorliegenden Unidirektionalgewebe können als Multifilamentverstärkungsgarne die üblichen zur Herstellung von faserverstärkten Verbundwerkstoffen verwendeten Verstärkungsfasern bzw. -garne eingesetzt werden. Vorzugsweise handelt es sich bei den Multifilamentverstärkungsgarnen um Kohlenstofffaser-, Glasfaser -, oder Aramidgarne oder um hochverstreckte UHMW-Polyethylengarne und besonders bevorzugt um Kohlenstofffasergarne. In einer vorteilhaften Ausführungsform liegen die Multifilamentverstärkungsgarne im Unidirektionalgewebe in einem Flächengewicht von 50 bis 500 g/m² vor. Besonders vorteilhaft ist ein Flächengewicht im Bereich von 100 bis 300 g/m². Vorzugsweise bestehen die Multifilamentverstärkungsgarne aus 500 bis 50000 Verstärkungsfaserfilamenten. Zur Erzielung einer besonders guten Drapierfähigkeit und eines besonders gleichmäßigen Erscheinungsbildes des Unidirektionalgewebes bestehen die Multifilamentverstärkungsgarne besonders bevorzugt aus 6000 bis 24000 Verstärkungsfaserfilamenten.

Bevorzugt ist das Multifilamentverstärkungsgarn ein Kohlenstofffasergarn mit einer Festigkeit von mindestens 5000 MPa und einem Zugmodul von mindestens 260 GPa gemessen nach Standard JIS-R-7608. Bezüglich des verwendeten Kohelstofffasergarns wird auf die noch unveröffentlichte japanische Anmeldung mit dem Aktenzeichen JP 2017-231749 verwiesen.

Die Querfäden können innerhalb des Unidirektionalgewebes beispielsweise unter einem rechten Winkel zu den Multifilamentverstärkungsgarnen verlaufen. Jedoch sind auch beliebige andere Winkel zwischen den Querfäden und den Multifilamentverstärkungsgarnen möglich.

In dem Herstellungsverfahren mit Vlies kann es sich bei dem Vlies beispielsweise um ein textiles Flächengebilde aus ungerichteten Kurzschnitt- oder Stapelfasern handeln oder um ein Wirrlagen-Vlies aus Endlosfilamenten, das verfestigt werden muss, z.B. unter Temperaturbeaufschlagung und unter Druck, wodurch die Filamente an den Kontaktpunkten verschmelzen und so das Vlies ausbilden. Wie ausgeführt, wird durch das Vlies zum einen eine Verbindung der Multifilamentverstärkungsgarne erreicht. Gleichzeitig wird eine gute Drapierbarkeit bewirkt. Bei dem Vlies kann es sich beispielsweise auch um ein Glasvlies oder ein Vlies aus Kohlenstofffasern handeln, das dann mittels eines Adhäsionsklebers mit der flächigen Lage der Multifilamentverstärkungsgarne klebend verbunden ist.

Vorzugsweise besteht das Vlies aus einem thermoplastischen Polymermaterial. Derartige Vliese werden beispielsweise in der DE 35 35 272 C2, der EP 0 323 571 A1, der US 2007/0202762 A1 oder der US 2008/0289743 A1 offenbart. Bei geeigneter Auswahl des thermoplastischen Polymermaterials kann das Vlies als Agens zur Erhöhung der Schlagzähigkeit wirken und weitere, die Schlagzähigkeit erhöhende Mittel brauchen dann bei der Herstellung der Verbundwerkstoff-Bauteile dem Matrixmaterial selbst nicht mehr zugefügt zu werden. Das Vlies sollte dabei während der Infiltration der aus dem Unidirektionalgewebe hergestellten Faservorformlinge mit Matrixmaterial noch hinreichende Stabilität aufweisen, bei anschließenden Press- und/oder Härtungstemperaturen vorzugsweise jedoch schmelzen. Bevorzugt besitzt daher das das Vlies aufbauende thermoplastische Polymermaterial eine Schmelztemperatur, die im Bereich von 80 bis 250°C liegt. Bei Anwendungen, bei denen Epoxidharze als Matrixmaterialien eingesetzt werden, haben sich beispielsweise Vliese aus Polyamid bewährt.

In einer bevorzugten Ausführungsform umfasst das Vlies eine erste und eine zweite Polymerkomponente, deren Schmelztemperatur unterhalb der Schmelz- oder Zersetzungstemperatur der zweiten Komponente der Querfäden liegen, wobei die zweite Polymerkomponente eine niedrigere Schmelztemperatur aufweist als die erste Polymerkomponente. Dabei ist als erste Polymerkomponente eine solche besonders bevorzugt, die in Epoxid-, Cyanatester-, oder Benzoxazin-Matrixharzen oder in Mischungen dieser Matrixharze nicht löslich ist. Von besonderem Vorteil ist es, wenn die Schmelztemperatur der ersten Polymerkomponente mindestens so hoch wie die Härtungstemperatur der Matrixharze ist.

Als erste Polymerkomponente des bevorzugt eingesetzten Vlieses können übliche zu thermoplastischen Fäden verarbeitbare Polymere eingesetzt werden, solange sie die zuvor genannten Bedingungen erfüllen, wie z.B. Polyamide, Polyimide, Polyamidimide, Polyester, Polybutadiene, Polyurethane, Polypropylene, Polyetherimide, Polysulfone, Polyethersulfone, Polyphenylensulfone, Polyphenylensulfide, Polyetherketone, Polyetheretherketone, Polyarylamide, Polyketone, Polyphtalamide, Polyphenylenether, Polybutylenterephthalate oder Polyethylenterephthalate oder Copolymere oder Mischungen dieser Polymere. Besonders bevorzugt ist die erste Polymerkomponente des Vlieses ein Polyamidhomopolymer oder Polyamidcopolymer oder eine Mischung aus Polyamidhomopolymeren und/oder Polyamidcopolymeren. Insbesondere ist das Polyamid-Homopolymer oder -Copolymer ein Polyamid 6, Polyamid 6.6, Polyamid 6.12, Polyamid 4.6, Polyamid 11, Polyamid 12 oder ein Copolymer auf Basis Polyamid 6/12. Bevorzugt weist die erste Polymerkomponente des Vlieses eine Schmelztemperatur im Bereich von 180 bis 250°C auf.

In einer vorteilhaften Ausführungsform weist die zweite Polymerkomponente des Vlieses eine Schmelztemperatur im Bereich von 80 bis 140°C auf. Für die zweite Polymerkomponente des Vlieses können übliche Polymere eingesetzt werden, deren Schmelztemperatur in diesem Bereich liegt, wie z.B. niedrigschmelzende Polyamid-Homopolymere oder -Copolymere sowie Mischungen dieser Polymere, Polyolefine, insbesondere Polyethylene (z.B. PE-LLD, PE-HD), Copolyester, Ethylenvinylacetate, Terpolymere, wie z.B. Acrylnitril-Butadien-StyrolCopolymerisate (ABS), oder Polyhydroxyether.

Dabei kann in einer bevorzugen Ausführungsform die zweite Polymerkomponente in Epoxid-, Cyanatester-, oder Benzoxazin-Matrixharzen oder in Mischungen dieser Matrixharze löslich sein. Des Weiteren ist in diesem Fall von besonderem Vorteil, wenn die zweite Polymerkomponente ein mit Epoxid-, Cyanatester-, oder Benzoxazin-Matrixharzen bei der Vernetzung dieser Matrixharze chemisch reagierendes Polymer ist. Besonders bevorzugt handelt es sich bei der zweiten Polymerkomponente dann um ein Polyhydroxyether, welcher sich insbesondere in Epoxidharzen, Cyanatesterharzen oder Benzoxazinharzen bereits während der Infiltrierung eines aus dem vorliegenden Unidirektionalgewebe hergestellten Faservorformlings mit diesen Matrixharzen, d.h. z.B. während des Harz-Infusionsprozesses, vollständig im Harzsystem löst und dann zusammen mit dem Matrixharz das Matrixharzsystem ausbildet. Die erste Polymerkomponente löst sich hingegen, wie ausgeführt, nicht im Matrixsystem und bleibt sowohl während als auch nach dem Harz-Infusionsprozess und auch nach der Aushärtung des Matrixsystems als eigene Phase bestehen.

Gemäß einer ebenfalls bevorzugen Ausführungsform ist die zweite Polymerkomponente in Epoxid-, Cyanatester-, oder Benzoxazin-Matrixharzen oder in Mischungen dieser Matrixharze nicht löslich. In diesem Fall kann es sich bei der zweiten Polymerkomponente des Vlieses z.B. um ein niedrigschmelzendes Polyamid- Homopolymer oder -Copolymer oder um Mischungen davon handeln oder um ein Polyolefin, insbesondere ein Polyethylen (z.B. PE-LLD, PE-HD), ein Copolyester, ein Ethylenvinylacetat oder ein Terpolymer, wie z.B. AcrylnitrilButadien-Styrol-Copolymerisate (ABS).

Bei Vliesen mit einer ersten und einer zweiten Polymerkomponente ist von besonderem Vorteil, wenn die Schmelztemperatur der ersten Polymerkomponente des Vlieses im Bereich von 180 bis 250°C und die Schmelztemperatur der zweiten Polymerkomponente des Vlieses im Bereich von 80 bis 140°C liegt.

Die erste Polymerkomponente schmilzt besonders bevorzugt oberhalb der Härtungstemperatur des eingesetzten Matrixharzes. Auf diese Weise wird die erste Polymerkomponente zwar in das Matrixmaterial eingebunden, bildet jedoch im ausgehärteten Matrixharz stets eine eigene Phase aus. Diese durch die erste Polymerkomponente ausgebildete separate Phase hilft bei der Aushärtung und im späteren Bauteil, eine Ausbreitung von Rissen zu begrenzen und trägt so z.B. zur Erhöhung der Schlagzähigkeit entscheidend bei.

Wenn das Vlies eine erste höherschmelzende und eine zweite niedrigerschmelzende Polymerkomponente aufweist, kann während der Herstellung eines Faservorformlings bei Erwärmung auf eine Temperatur oberhalb der Schmelztemperatur der zweiten Polymerkomponente, jedoch unterhalb der Schmelztemperatur der ersten Polymerkomponente, eine Beweglichkeit der Unidirektionalgewebe gegeneinander erreicht werden. Die geschmolzene zweite Komponente des Vlieses wirkt gewissermaßen als Gleitmittel, so dass die Lagen der Verstärkungsgarne beim Umformprozess in die Preform in die gewünschte Lage gleiten können. Bei Abkühlung der Preform wirkt dann die zweite Polymerkomponente als Schmelzkleber und fixiert die Verstärkungslagen in ihrer Position.

Bei der nachfolgenden Infiltrierung des Faservorformlings mit Matrixharz, die in der Regel bei Temperaturen oberhalb der Schmelztemperatur der zweiten, jedoch unterhalb der Schmelztemperatur der ersten Komponente erfolgt, ist durch die höherschmelzende erste Polymerkomponente des Vlieses eine gute Durchlässigkeit für das Matrixharz gewährleistet. Ist die zweite Polymerkomponente entsprechend der einen zuvor genannten bevorzugten Ausführungsformen im Matrixharz löslich, löst sich diese Komponente dann vorzugsweise vollständig im Matrixharz auf und verliert auf diese Weise ihre Identität als eigenständige Phase gegenüber dem Matrixharz. Daher ist dann der Anteil der zweiten Polymerkomponente somit dem Matrixmaterial zuzurechnen und der zu infiltrierende Anteil an Matrixharz kann um den Anteil der zweiten Polymerkomponente reduziert werden. Infolgedessen können hohe Faservolumenanteile der Verstärkungsfasern im resultierenden Bauteil eingestellt und damit das Niveau der mechanischen Festigkeitskennwerte auf hohem Niveau gehalten werden. Bei der Aushärtetemperatur des Matrixharzes, d.h. des Epoxid-, Cyanatester-, oder Benzoxazinharzes, reagiert in einer besonders bevorzugten Ausführungsform die zweite Polymerkomponente chemisch mit dem aushärtenden Matrixharz über Vernetzungsreaktionen und wird so integraler Teil einer homogenen Matrix.

Im Fall, dass die zweite Polymerkomponente in Epoxid-, Cyanatester-, oder Benzoxazin-Matrixharzen oder in Mischungen dieser Matrixharze nicht löslich ist, wirkt die erste Polymerkomponente ebenso, wie zuvor erläutert, als ein Beweglichkeit der Substratlagen gegeneinander vermittelndes Gleitmittel, so dass die Lagen der Verstärkungsgarne beim Umformprozess zur Preform in die gewünschte Lage gleiten können, und bei Abkühlung der Preform dann als Schmelzkleber, der die Verstärkungslagen in ihrer Position fixiert. Bei der Infiltrierung des Matrixharzes und dessen anschließender Härtung bleibt ihre Identität als eigenständige Phase gegenüber dem Matrixharz jedoch dann erhalten, so dass in diesem Fall die zweite Polymerkomponente - wie auch die erste Polymerkomponente - die Ausbreitung von Rissen verringert und so z.B. zur Verbesserung der Schlagzähigkeit beiträgt.

Im bevorzugten Fall, dass das Vlies eine erste Polymerkomponente mit höherer Schmelztemperatur und eine zweite Polymerkomponente mit niedrigerer Schmelztemperatur aufweist, kann es aus einer Mischung von Monokomponentenfasern aus den jeweiligen Polymerkomponenten bestehen, also ein Hybridvlies sein. Das Vlies kann jedoch auch aus Bikomponentenfasern bestehen, beispielsweise aus Kern-Mantel Fasern, wobei der Kern der Fasern aus der höher schmelzenden ersten Polymerkomponente und der Mantel aus der niedriger schmelzenden zweiten Polymerkomponente aufgebaut ist. Bei der Verarbeitung der Unidirektionalgewebe mit solchen Hybridvliesen oder Bikomponentenvliesen zu Faservorformlingen, also zu Preformen, die beispielsweise auch eine Verformung der Unidirektionalgewebe erfordert, kann bei einer geeigneten Wärmebeaufschlagung während der Verformung bei Temperaturen oberhalb des Schmelzpunktes der niedriger schmelzenden Vlieskomponente aber unterhalb des Schmelzpunktes der höher schmelzenden Vlieskomponente eine gute Verformbarkeit und nach Abkühlung eine gute Stabilisierung und Fixierung des verformten Gewebes erzielt werden. Ähnlich einem Vlies aus Bikomponentenfasern kann das Vlies auch z.B. aus einer Wirrlage von Fasern aus der ersten Polymerkomponente aufgebaut sein, wobei die zweite Polymerkomponente z.B. durch Besprühen oder durch Beschichten auf die Fasern der ersten Polymerkomponente aufgetragen wurde. Die Beschichtung kann beispielsweise über eine Imprägnierung mit einer Dispersion oder Lösung der zweiten Polymerkomponente erfolgen, wobei nach der Imprägnierung der Flüssigkeitsanteil der Dispersion bzw. das Lösemittel entfernt wurde. Ebenso ist es möglich, dass ein aus Fasern der ersten Polymerkomponente aufgebautes Vlies die zweite Polymerkomponente in Gestalt feiner, zwischen die Fasern der ersten Polymerkomponente eingelagerter Partikel enthält.

Vorzugsweise handelt es sich bei dem eine erste und eine zweite Polymerkomponente umfassenden Vlies um ein Hybridvlies, d.h. um ein Vlies aus einer Mischung von Monokomponentenfasern mit unterschiedlichen Schmelztemperaturen. Wie ausgeführt hat dabei besonders bevorzugt die erste Polymerkomponente mit höherer Schmelztemperatur eine Schmelztemperatur im Bereich von 180 bis 250°C. Bei solchen Temperaturen schmilzt der Teil des Vlieses, der aus der ersten Polymerkomponente besteht, erst oberhalb der Temperaturen, die in der Regel bei der Injektion des Matrixharzes vorherrschen. Da somit die erste Polymerkomponente bei der Harzinjektionstemperatur noch nicht schmilzt, ist eine gute Formkonstanz des Unidirektionalgewebes in diesem Stadium gewährleistet.

Im Hinblick auf die Eigenschaften der mit den vorliegenden Unidirektionalgeweben hergestellten Verbundbauteile, insbesondere im Hinblick auf deren Schlagzähigkeit und auf deren Matrixgehalte ist es von Vorteil, wenn das Vlies die erste Polymerkomponente in einem Anteil von 60 bis 80 Gew.-% und die zweite Polymerkomponente in einem Anteil von 20 bis 40 Gew.-% enthält. Insgesamt ist es bevorzugt, wenn das im Unidirektionalgewebe vorliegende Vlies ein Flächengewicht im Bereich von 3 bis 25 g/m² und besonders bevorzugt ein Flächengewicht im Bereich von 5 bis 15 g/m² aufweist.

Vorzugsweise weist das Vlies eine Dicke, gemessen senkrecht zur Haupterstreckungsrichtung des Vlieses, von weniger als 60 µm, bevorzugter weniger als 30µm und besonders bevorzugt im Bereich von 10 bis 30 µm, gemessen nach DIN EN ISO9073-2 auf.

Insbesondere in Fällen, bei denen das Vlies des Unidirektionalgewebes nur eine bei höheren Temperaturen schmelzende Polymerkomponente aufweist, d.h. also beispielsweise nur eine Polymerkomponente, deren Schmelztemperatur im Bereich von 180 bis 250°C liegt, umfasst das Unidirektionalgewebe in einer bevorzugten Ausführungsform des Weiteren an mindestens einer der Oberflächen der flächigen Lage der Multifilamentverstärkungsgarne ein Bindermaterial, dessen Hauptkomponente ein thermoplastisches Polymer oder ein bei Raumtemperatur festes Epoxidharz auf Basis Bisphenol A ist und das diskontinuierlich auf der flächigen Lage der Multifilamentverstärkungsgarne aufgetragen und haftend mit den Multifilamentverstärkungsgarnen verbunden ist. Unter einer diskontinuierlichen Auftragung wird verstanden, dass das Bindermaterial punktförmig, in Form von Linien oder in sonstige Weise auf der Oberfläche aufgetragen ist, ohne dass eine geschlossene Schicht des Bindermaterials vorliegt. Vorzugsweise liegt das Bindermaterial in einer Konzentration von 1 bis 5 Gew.-% des Flächengewichts der Multifilamentverstärkungsgarne vor.

In einer besonders bevorzugten Ausführungsform des Unidirektionalgewebes basiert das Bindermaterial auf einem pulverförmigen Material und ist punktförmig auf der flächigen Lage der Multifilamentverstärkungsgarne aufgetragen. Dies kann dadurch erreicht werden, dass das pulverförmige Bindermaterial auf die Oberfläche der Lage aus zueinander parallel nebeneinander angeordneten Multifilamentverstärkungsgarnen aufgestreut und durch Anschmelzen auf der Oberfläche fixiert wird.

Als thermoplastische Polymere für das Bindermaterial können bevorzugt Polyvinylacetat, Polycarbonat, Polyacetal, Polyphenylenoxid, Polyphenylensulfid, Polyallylat, Polyester, Polyamid, Polyamidimid, Polyimid, Polyetherimid, Polysulfon, Polyethersulfon, Polyetheretherketon, Polyaramid, Polybenzoimidazol, Polyethylen, Polypropylen oder Celluloseacetat verwendet werden.

Vorzugsweise liegt die Schmelztemperatur des Bindermaterials im Bereich von 80 bis 120°C. Das Bindermaterial kann dabei allein die Aufgabe haben, bei der Herstellung von Faservorformlingen aufeinandergelegte Lagen des Unidirektionalgewebes durch Aufheizen auf eine Temperatur oberhalb der Schmelztemperatur des Bindermaterials und anschließendes Abkühlen miteinander zu verbinden und gegeneinander zu fixieren. Darüber hinaus kann das Bindermaterial zur Stabilisierung des Faservorformlings beitragen, wenn z.B. eine Verformung der Lagen des Unidirektionalgewebes bei der Ausbildung des Faservorformlings erfolgt ist. Schließlich ist es jedoch auch möglich, dass das Bindermaterial so ausgewählt wird, dass es zu einer Verbesserung der mechanischen Eigenschaften des aus dem Faservorformling hergestellten Verbundwerkstoff-Bauteils beiträgt, indem es z.B. die Schlagzähigkeit des Bauteils verbessert. Hierzu ist von Vorteil, wenn das Bindermaterial ein thermoplastisches Material mit einer hohen Zähigkeit oder eine Mischung eines solchen thermoplastischen Polymers mit einem bei Raumtemperatur festen Epoxidharz auf Basis Bisphenol A ist.

Aufgrund seines spezifischen Aufbaus zeichnet sich das Unidirektionalgewebe durch eine gute Drapierbarkeit und Fixierbarkeit der Substratlagen im Faservorformling bzw. in der Preform aus, durch eine gute und einstellbare Durchlässigkeit bei der Infiltrierung mit Matrixharz zur Bauteilfertigung aus der Preform sowie dadurch, dass mit ihnen Bauteile mit hohen mechanischen Festigkeiten und mit hoher Schlagzähigkeit herstellbar sind. Daher betrifft die vorliegende Erfindung insbesondere auch einen Faservorformling bzw. eine Preform zur Herstellung eines Verbundwerkstoff-Bauteils, welche ein erfindungsgemäßes Unidirektionalgewebe umfasst.

Durch die Verbindung der Multifilamentverstärkungsgarne mit den Querfäden und gegebenenfalls gleichzeitig mit dem Vlies sowie gegebenenfalls mit dem Bindermaterial in Form einer Klebeverbindung erhält das Unidirektionalgewebe ein hohes Maß an Formstabilität, da durch die Klebeverbindungen eine exzellente Fixierung der Multifilamentverstärkungsgarne im Verhältnis zueinander erhalten wird. Damit sind nicht nur Unidirektionalgewebe realisierbar, bei denen die Multifilamentverstärkungsgarne in gerader Form nebeneinander und parallel zueinander vorliegen, sondern auch Unidirektionalgewebe mit einer gebogenen Form. Eine bevorzugte Ausführungsform betrifft daher ein Unidirektionalgewebe, bei dem die mindestens eine ebene Lage aus zueinander parallel nebeneinander angeordneten Multifilamentverstärkungsgarnen eine gebogene Kontur aufweist, bei der die Multifilamentverstärkungsgarne parallel zu einer Umfangsrichtung der gebogenen Kontur angeordnet sind und jedes Multifilamentverstärkungsgarn auf seiner eigenen, der Umfangsrichtung der gebogenen Kontur zugeordneten Bahnkurve verläuft und die Bahnkurven der einzelnen Multifilamentverstärkungsgarne einen gemeinsamen Krümmungsmittelpunkt aufweisen.

In einem solchen Unidirektionalgewebe mit einer gebogenen Form oder Kontur sind die Multifilamentverstärkungsgarne parallel zu einer Richtung (0° Richtung) entlang einer Umfangsrichtung der gebogenen Kontur. Im Unterschied zu Gelegen, bei denen die Multifilamentverstärkungsgarne zueinander parallel nebeneinander angeordnet sind und einen geraden, linearen Verlauf haben, sind die Multifilamentverstärkungsgarne bei den Unidirektionalgewebe mit einer gebogenen Form ebenfalls zueinander parallel nebeneinander angeordnet, verlaufen aber auf unterschiedlichen gebogenen Bahnkurven mit gemeinsamem Krümmungsmittelpunkt. Die Querfäden erstrecken sich auch hierbei in einer die Multifilamentverstärkungsgarne kreuzenden Richtung quer zu den Multifilamentverstärkungsgarnen. Diese gebogene Form bleibt auf Grund der hohen Formstabilität und in Folge der Ausgestaltung des vorliegenden Unidirektionalgewebes, insbesondere durch die Querfäden einer Kern-Mantel-Struktur aus zwei Komponenten, auch bei nachfolgenden Verarbeitungsschritten zum Faservorformling bzw. zum Verbundwerkstoff-Bauteil erhalten. Hierbei wird eine weitere Stabilisierung bei Unidirektionalgeweben erhalten, die ein Vlies aufweisen und bei denen das Vlies aus thermoplastischem Polymermaterial eine erste Polymerkomponente und eine zweite Polymerkomponente umfasst, welche die zuvor beschriebenen Eigenschaften aufweisen.

Einen weiteren Gegenstand der vorliegenden Erfindung betrifft ein Faservorformling zur Herstellung von Verbundwerkstoffbauteilen, wobei der Faservorformling mittels eines textilen Unidirektionalgewebes hergestellt wurde, wie es hier beschrieben wurde.

Die Erfindung wird mittels Versuchen und Figuren näher beschrieben.
Figur 1 zeigt schematisch ein Unidirektionalgewebe mit einer Köperbindung 3/1 mit 0,8 Fäden pro Zentimeter. Figur 1A zeigt die Durchsicht eines solchen Gewebes.
Figur 2 zeigt schematisch ein Unidirektionalgewebe. Figur 2A zeigt schematisch die Durchsicht eines Unidirektionalgewebes mit einer Leinwandbindung 1/1 und 3,0 Fäden pro Zentimetern. Figure 2B zeigt schematisch in einer Detaildarstellung die Entstehung von Gassen in einem Unidirektionalgewebe.

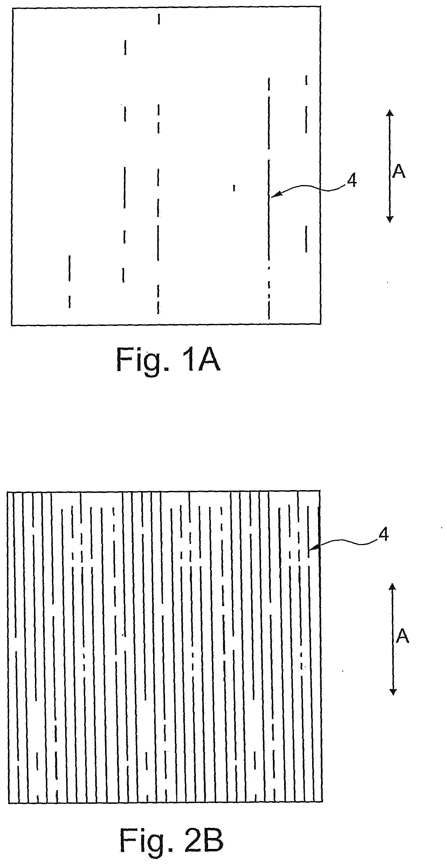

Figur 1 ist eine schematische Darstellung eines Unidirektionalgewebes 1 mit einer Köperbindung 3/1 mit 0,8 Fäden pro Zentimeter. Das Multifilamentverstärkungsgarn 2 liegt als Bändchengarn vor. Querfäden 3 sind mit den Multifilamentverstärkungsgarnen 2 in Richtung des Pfeils B verwebt, wobei die Verwebung nicht wesentlich zu einer Stabilisierung des Unidirektionalgewebes 1 beiträgt. Stabilisiert wird das Unidirektionalgewebe 1 durch eine Verklebung der Querfäden 3 mit den Multifilamentverstärkungsgarnen 1.

Figur 1A zeigt die Durchsicht eines Unidirektionalgewebes 1 nach Figur 1. In der Durchsicht können Gassen 4 dargestellt werden, da an den Stellen der Gassen 4 Licht durch das Unidirektionalgewebe 1 gelangt und als helle Streifen sichtbar wird. Die Multifilamentverstärkungsgarne 2 laufen entlang des Pfeils A. Durch die Querfäden 3 werden die Multifilamentverstärkungsgarne 2 an den Bindungspunkten verschoben, so dass es zu Bildung der Gassen 4 kommt. Einige der Gassen 4 können eine große Gasse bilden, wenn das für die Permeabilität gewünscht ist. Aus der Figur 1A wird allerdings gut deutlich, dass die Gassen 4 auch nur sehr lokal im Unidirektionalgewebe 1 vorliegen können. Hierdurch wird insbesondere die Einstellung geringer Permeabilitäten oder die Einstellung von unterschiedlichen Permeabilitätsbereichen innerhalb des Unidirektionalgewebes 1 möglich.

In Figur 2 ist schematisch das Fadenbild der Multifilamentverstärkungsgarne 2 eines Unidirektionalgewebes 1 dargestellt. In der Darstellung ist eine einzelne Lage des Unidirektionalgewebes 1 mit Abstand betrachtet gezeigt, wobei durch den Abstand die Gassen 4 nicht erkennbar sind.

Die Figur 2A zeigt schematisch eine Detaildarstellung der Verwebung von Multifilamentverstärkungsgarn 2 mit den Querfäden 3. Durch die Querfäden 3 mit denen das Multifilamentverstärkungsgarn 2 verwebt wurde, entstehen im Unidirektionalgewebe 1 an den Bindungspunkt Gassen 4 (oder Durchlässe oder Lücken), durch die ein Matrixmaterial durch das Unidirektionalgewebe 1 fließen kann. Durch die Anzahl der Gassen 4 im Unidirektionalgewebe 1 wird die Permeabilität des Unidirektionalgewebes einstellbar. Die Anzahl der Gassen 4 im Unidirektionalgewebe 1 lässt sich besonders gut anhand der Bindung bei der Verwebung der Querfäden 3 mit den Multifilamentverstärkungsgarnenen 2 und der Wahl des Querfadentiters einstellen. Durch die gezielte Auswahl des Querfadentiters wird an einer kleinen Stelle der Lage aus Multifilamentverstärkungsgarnen das Multifilamentverstärkungsgarn 2 verschoben, so dass eine einzelne Gasse 4 entsteht. Die Gasse 4 erstreckt sich nicht entlang der Garnausbreitungsrichtung (Pfeil A) über den überwiegenden Teil der Garnlänge. Vielmehr entstehen die Gassen 4 nur sehr lokal an dem Bindungspunkt zwischen dem Multifilamentverstärkungsgarn 2 und dem Querfaden 3.

In Figur 2B ist schematisch ein Unidirektionalgewebe 1 in Durchsicht mit einer Leinwandbindung 1/1 und 3,0 Fäden pro Zentimeter dargestellt. In diesem speziellen Fall sind die Gassen 4 zu großen Gassen zusammengeführt worden, wodurch eine hohe Permeabilität erreicht werden kann. Da als Querfaden 3 allerdings ein Kern-Mantel-Faden verwendet wird, kann die mit Matrixharz infiltrierte Lage trotz der jetzt in Durchsicht dargestellten großen Gassen wieder nur kleine Gassen 4 aufweisen. Dieser Effekt lässt sich dadurch erreichen, dass die erste Komponente des Querfadens 3 bei der Infiltrierung aufschmelzen kann und so die Gasse 4 noch während der Infiltrierung wieder verschließt. In einem solchen Fall kann das Multifilamentverstärkungsgarn 2 wieder zurück verschoben werden, so dass die Gasse 4 kleiner wird.

Die Bindung durch die Verwebung in Figur 1 ist deutlich geringer als die Bindung durch das Verweben in Figur 2. In Figur 1 ist somit ein weniger dicht verwebtes Unidirektionalgewebe 1 dargestellt als in Figur 2. Es lässt sich jedoch gut erkennen, dass in dem Unidirektionalgewebe 1 der Figur 2 eine größere Anzahl von Gassen 4 und auch große (sich langerstreckende) Gassen gebildet werden als in dem Unidirektionalgewebe der Figur 1. Folglich führt eine lockere Bindung zu einer geringeren Permeabilität als eine feste Bindung (erreicht durch die Verwebung des Querfadens 3 mit den Multifilamentverstärkungsgarnenen 2).

Die Einstellung unterschiedlicher Permeabilitäten wird anhand von Beispielen näher beschrieben.

Als Multifilamentverstärkungsgarn für den Aufbau des Unidirektionalgewebes wurden in allen Versuchen Tenax® -E IMS65 E23 24K 830tex Garne verwendet, die einen flachen Querschnitt von etwa 7 mm aufwiesen (sogenannte Bändchengarne). Durch das eingestellte Faserflächengewicht ergibt sich im Unidirektionalgewebe eine Bändchenbereite von etwa 3 mm.

Alle Versuche sind ohne ein zusätzliches Vlies auf dem Unidirektionalgewebe (UD) gemacht worden. Ein mögliches Vlies ist von der Struktur her so offen, das es keinen Einfluss auf die Permeabilität gibt.

Zur Herstellung des Unidirektionalgewebes wurden die Multifilamentverstärkungsgarne mit den Querfäden verwebt. Im Beispiel 1 wurden für die Unidirektionalgewebe UD 2 bis UD 3 die gleichen Bindungstypen aber mit unterschiedlichen Schussfadendichten gewählt (siehe Tabelle 1). Im Beispiel 2 unterschieden sich jeweils UD 4 und UD 3 sowie UD 5 und UD 6 durch den Titer des verwendeten Schussgarnes (Tabelle 2). Für die Querfäden wurden folgende Garne verwendet:
1. 20tex - Typ EMS-Grilon C-85
2: 29tex - Kern: Glas Vetrotex EC-5 5,5tex + 2xEMS Grilon K-110 umwunden
3: 35tex - kern: Glas Vetrotex EC-5 11tex + 2xEMS Grilon K-110 umwunden

Gemessen wurde die Luftdurchlässigkeit der so gebildeten Unidirektionalgewebe mittels der Prüfnorm EN ISO 9237, wobei ein Luftdruck von 200 Pa. verwendet wurde. Das resultierende Ergebnis lässt einen direkten Rückschluss auf die Permeabilität der untersuchten Unidirektionalgewebe zu.

### Beispiel 1: Identischer Schussfaden (Querfaden), Variation der Bindung

**Tabelle 1**

| Bezeichnung | Kohlenstofffaser | Faserflächengewicht | Schussgarn | Bindung | Schuss Fd/cm | **Luftdurchlässigkeit** | **Veränderung** |
|---|---|---|---|---|---|---|---|
| UD-1 | Tenax® -E IMS65 E23 24K 830tex | 268 g/m² | 35tex | Köper 3/1 | 0.8 | **25.1l/dm²/min** | **100%** |
| UD-2 | Tenax® -E IMS65 E23 24K 830tex | 268 g/m² | 35tex | Leinwand | 1.1 | **89.9l/dm²/min** | **358%** |
| UD-3 | Tenax® -E IMS65 E23 24K 830tex | 268 g/m² | 35tex | Leinwand | 3.0 | **494.0l/dm²/min** | **1968%** |

### Beispiel 2: Identische Bindung, Variation des Schussfaden (Querfaden)

**Tabelle2**

| Bezeichnung | Kohlenstofffaser | Faserflächengewicht | Schussgarn | Bindung | Schuss Fd/cm | **Luftdurchlässigkeit** | **Veränderung** |
|---|---|---|---|---|---|---|---|
| UD-4 | Tenax® -E IMS65 E23 24K 830tex | 268 g/m² | 29tex | Leinwand | 3.0 | **297.0l/dm²/min** | **100%** |
| UD-3 | Tenax® -E IMS65 E23 24K 830tex | 268 g/m² | 35 tex | Leinwand | 3.0 | **494.0l/dm²/min** | **166%** |
| | | | | | | | |

| Bezeichnung | Kohlenstofffaser | Faserflächengewicht | Schussgarn | Bindung | Schuss Fd/cm | Luftdurchlässigkeit | **Veränderung** |
|---|---|---|---|---|---|---|---|
| UD-5 | Tenax® -E IMS65 E23 24K 830tex | 268 g/m² | 20tex | Köper 3/1 | 0.8 | **14.8** l/dm²/min | **100%** |
| UD-6 | Tenax® -E IMS65 E23 24K 830tex | 268 g/m² | 35 tex | Köper 3/1 | 0,8 | **25.1** l/dm²/min | **170%** |

Als Bindung des Unidirektionalgewebes soll die Kombination aus Bindungstyp und Anzahl von Schussfaden pro Zentimeter verstanden werden.

Wie sich aus Beispiel 1 gut erkennen lässt, führt eine lockere Leinwandbindung gegenüber einer festeren Köperbindung zu einer verbesserten Permeabilität des Unidirektionalgewebes. Bei der Verwendung des gleichen Bindungstypes bei UD 2 und UD 3 entscheidet die Anzahl der Schussfäden pro Zentimeter wie dicht das Unidirektionalgewebe gewebt ist. Bei einem dichteren Unidirektionalgewebe (UD 3 gegenüber UD 2) ist die Luftdurchlässigkeit und somit auch die Permeabilität deutlich höher.

Beispiel 2 zeigt, dass eine Variation der Feinheit des Schussfadens- bei gleichem Bindungstyp und gleichem Verhältnis Schussfaden pro Zentimeter - auch zu einer Veränderung der Permeabilität führt.

Generell zeigen alle Beispiele, dass die die Permeabilität des Unidirektionalgewebes eingestellt werden kann. Die gewünschte Permeabilität kann dabei durch die Verwebung der Multifilamentverstärkungsgarne mit dem Querfaden und durch die Feinheit des Querfadens und der Kern-Mantel-Struktur des Querfadens beeinflusst werden. Überraschend und völlig unerwartet hat es sich dabei gezeigt, dass ein dichtgewebtes Unidirektionalgewebe eine höhere Permeabilität aufweist als ein locker verwebtes Unidirektionalgewebe.

## Patentansprüche

1. Verfahren zur Herstellung eines textilen Unidirektionalgewebes (1), wobei mindestens eine flächige Lage aus zueinander parallel nebeneinander angeordneten Multifilamentverstärkungsgarnen (2) über Querfäden (3) miteinander verwebt werden, wobei die benachbarten Garne der Multifilamentverstärkungsgarne (2) innerhalb einer Lage überwiegend miteinander in einem direkten Kontakt stehen, wobei als Querfäden (3) Querfäden mit einer Kern-Mantel-Struktur verwendet werden, wobei die Querfäden (3) eine den Mantel aufbauende erste Komponente und eine den Kern aufbauende zweite Komponente aufweisen, wobei die erste Komponente eine niedrigere Schmelztemperatur aufweist als die zweite Komponente, die erste Komponente ein schmelzbares thermoplastisches Polymermaterial ist und über die erste Komponente der Querfäden (3) die nebeneinander angeordneten Multifilamentverstärkungsgarne durch Schmelzklebung miteinander verbunden werden, wobei die Querfäden einen Titer von 10 bis 40 tex, gemessen nach EN ISO 2060:1995 haben und durch die Verwebung der Querfäden(3) mit den Multifilamentverstärkungsgarnen (2) innerhalb der flächigen Lage aus nebeneinander angeordneten Multifilamentverstärkungsgarnen (2) Gassen (4) gebildet werden, durch die eine Permeabilität von 10 bis 600 l/dm²/min, gemessen nach EN ISO 9237, einstellbar wird, wobei die Gassen (4) lediglich nur sehr lokal an Kreuzungspunkten zwischen Multifilamentverstärkungsgarn (2) und Querfaden (3) durch die Verwebung entstehen.

2. Verfahren nach Anspruch 1, **dadurch gekennzeichnet, dass** auf der mindestens einen flächigen Lage der Multifilamentverstärkungsgarne (2) ein Vlies aus thermoplastischem Polymermaterial angeordnet wird, welches mit der flächigen Lage der Multifilamentverstärkungsgarne (2) klebend verbunden wird.

3. Verfahren nach mindestens einem der vorhergehenden Ansprüche,
**dadurch gekennzeichnet, dass** eine Permeabilität von über 25 l/dm²/min, bevorzugter von über 50 l/dm²/min eingestellt wird und/oder die Gassen (4) im Wesentlichen nur im Bereich eines Bindungspunktes der Verwebung von Multifilamentverstärkungsgarn (2) und Querfaden (3) gebildet werden.

4. Verfahren nach mindestens einem der vorhergehenden Ansprüche,
**dadurch gekennzeichnet, dass** die Querfäden (3) zur Bildung des textilen Unidirektionalgewebes mit den Multifilamentverstärkungsgarnen bevorzugt in einer Köper- oder Leinwandbindung verwebt werden.

5. Verfahren nach Anspruch 4, **dadurch gekennzeichnet, dass** als Bindung eine Köperbindung 3/1 mit 0,8 bis 3,0 Fd/cm, eine Köperbindung 3/1 mit 0,8 bis 3,0Fd/cm, eine Köperbindung 2/1 mit 0,8 bis 3,0 Fd/cm, eine Leinwandbindung 1/1 mit 0,8 bis 3,0 Fd/cm und/oder eine Leinwandbindung 1/1 mit 0,8 bis 3,0 Fd/cm verwendet wird.

6. Verfahren nach einem der vorhergehenden Ansprüche, **dadurch gekennzeichnet, dass** für die erste Komponente der Querfäden (3) eine Komponente mit einer Schmelztemperatur im Bereich von 70 bis 150°C verwendet wird.

7. Verfahren nach Anspruch 6, **dadurch gekennzeichnet, dass** als erste Komponente der Querfäden (3) ein Polyamidhomopolymer oder Polyamidcopolymer oder eine Mischung aus Polyamidhomopolymeren und/oder Polyamidcopolymeren verwendet wird.

8. Verfahren nach einem der vorhergehenden Ansprüche, **dadurch gekennzeichnet, dass** als zweite Komponente der Querfäden (3) eine Komponente mit einer Schmelztemperatur oberhalb von 200°C verwendet wird.

9. Verfahren nach einem der vorhergehenden Ansprüche, **dadurch gekennzeichnet, dass** als zweite Komponente der Querfäden (3) Glas oder ein Polyester verwendet wird.

10. Verfahren nach einem der vorhergehenden Ansprüche, **dadurch gekennzeichnet, dass** Querfäden (3) mit einem Titer im Bereich von 15 bis 35 tex, bevorzugter 20 bis 25 tex gemessen nach EN ISO 2060:1995 verwendet werden.

11. Verfahren nach Anspruch 2, **dadurch gekennzeichnet, dass** als Vlies ein Vlies mit einem Flächengewicht im Bereich von 3 bis 25 g/m² verwendet wird.

12. Verfahren nach Anspruch 2, **dadurch gekennzeichnet, dass** als Vlies ein Vlies mit einer Dicke, gemessen senkrecht zur Ausbreitungsrichtung des Vlieses, von weniger als 60 µm, bevorzugt weniger als 30 µm und besonders bevorzugt weniger als 10 µm, gemessen nach DIN ISO 9073-2, verwendet wird.

13. Verfahren nach Anspruch 2, **dadurch gekennzeichnet, dass** als Vlies ein Vlies mit einer erste Polymerkomponente und einer zweiten Polymerkomponente verwendet wird, wobei die erste Polymerkomponente eine Schmelztemperatur unterhalb der Schmelz- oder Zersetzungstemperatur der zweiten Komponente der Querfäden (3) hat und die in Epoxid-, Cyanatester-, oder Benzoxazin-Matrixharzen oder in Mischungen dieser Matrixharze nicht löslich ist, wobei die zweite Polymerkomponente eine niedrigere Schmelztemperatur aufweist als die erste Polymerkomponente.

14. Verfahren nach einem der vorhergehenden Ansprüche, **dadurch gekennzeichnet, dass** als Multifilamentverstärkungsgarne (2) Kohlenstofffaser-, Glasfaser- oder Aramidgarne oder hochverstreckte UHMW-Polyethylengarne verwendet werden.

15. Verfahren nach einem der vorhergehenden Ansprüche, **dadurch gekennzeichnet, dass** als Multifilamentverstärkungsgarn ein Kohlenstofffasergarn mit einer Festigkeit von mindestens 5000 MPa gemessen nach JIS-R- 7608 und einem Zugmodul von mindestens 260 GPa, gemessen nach JIS-R- 7608 verwendet wird.

16. Verfahren nach einem der vorhergehenden Ansprüche, **dadurch gekennzeichnet, dass** die mindestens eine ebene Lage aus zueinander parallel nebeneinander angeordneten Multifilamentverstärkungsgarnen (2) eine gebogene Kontur aufweist, bei der die Multifilamentverstärkungsgarne (2) parallel zu einer Umfangsrichtung der gebogenen Kontur angeordnet werden und jedes Multifilamentverstärkungsgarn (2) auf seiner eigenen, der Umfangsrichtung der gebogenen Kontur zugeordneten Bahnkurve verläuft und die Bahnkurven der einzelnen Multifilamentverstärkungsgarne (2) einen gemeinsamen Krümmungsmittelpunkt aufweisen.

17. Faservorformling zur Herstellung von Verbundwerkstoffbauteilen, **dadurch gekennzeichnet, dass** sie ein textiles Unidirektionalgewebe (1) hergestellt nach einem der Ansprüche 1 bis 16 umfasst.

## Claims

1. Method for producing a textile unidirectional fabric (1), wherein at least one flat layer of mutually parallel juxtaposed multifilament reinforcement threads (2) are interwoven with transverse threads (3), wherein the adjacent threads of the multifilament reinforcement threads (2) are predominantly in contact with each other within one layer, wherein transverse threads with a core-sheath structure are used as the transverse threads (3), wherein the transverse threads (3) have a first component constituting the sheath and a second component constituting the core, wherein the first component has a lower melting temperature than the second component, the first component is a meltable thermoplastic polymer material, and the juxtaposed multifilament reinforcement threads are bonded together by melt bonding via the first component of the transverse threads (3), wherein the transverse threads have a titre of 10 to 40 tex, measured according to EN ISO 2060: 1995, and, by the interweaving of the transverse threads (3) with the multifilament reinforcement threads (2) within the flat layer of juxtaposed multifilament reinforcement threads (2), alleys (4) are formed through which a permeability of 10 to 600 l/dm²/min, measured according to EN ISO 9237, can be set, wherein the alleys (4) are only created very locally at crossing points between multifilament reinforcement threads (2) and transverse threads (3) by the interweaving.

2. Method according to claim 1, **characterised in that** a non-woven of thermoplastic polymer material is arranged on the at least one flat layer of the multifilament reinforcement threads (2), and is adhesively bonded to the flat layer of the multifilament reinforcement threads (2).

3. Method according to at least one of the preceding claims, **characterised in that** a permeability of above 25 l/dm²/min, more preferably above 50 l/dm²/min, is set, and/or the alleys (4) are substantially formed only in the area of a binding point of the interweaving of multifilament reinforcement thread (2) and transverse thread (3).

4. Method according to at least one of the preceding claims, **characterised in that** the transverse threads (3) are woven with the multifilament reinforcement threads to form the textile unidirectional fabric preferably in a twill or plain weave.

5. Method according to claim 4, **characterised in that** the binding used is a twill weave 3/1 with 0.8 to 3.0 Fd/cm, a twill weave 3/1 with 0.8 to 3.0 Fd/cm, a twill weave 2/1 with 0.8 to 3.0 Fd/cm, a plain weave 1/1 with 0.8 to 3.0 Fd/cm and/or a plain weave 1/1 with 0.8 to 3.0 Fd/cm.

6. Method according to any of the preceding claims, **characterised in that** a component having a melting temperature in the range of 70 to 150°C is used for the first component of the transverse threads (3).

7. Method according to claim 6, **characterised in that** a polyamide homopolymer or polyamide copolymer or a mixture of polyamide homopolymers and/or polyamide copolymers is used as the first component of the transverse threads (3).

8. Method according to any of the preceding claims, **characterised in that** a component having a melting temperature above 200°C is used as the second component of the transverse threads (3).

9. Method according to any of the preceding claims, **characterised in that** glass or a polyester is used as the second component of the transverse threads (3).

10. Method according to any of the preceding claims, **characterised in that** transverse threads (3) with a titre in the range of 15 to 35 tex, more preferably 20 to 25 tex, measured according to EN ISO 2060: 1995, are used.

11. Method according to claim 2, **characterised in that** a non-woven having a weight per unit area in the range of 3 to 25 g/m² is used as the non-woven.

12. Method according to claim 2, **characterised in that** a non-woven having a thickness, measured perpendicular to the propagation direction of the non-woven, of less than 60 µm, preferably less than 30 µm and most preferably less than 10 µm, measured according to DIN ISO 9073-2, is used as the non-woven.

13. Method according to claim 2, **characterised in that** a non-woven having a first polymer component and a second polymer component is used as the non-woven, wherein the first polymer component has a melting temperature below the melting or decomposition temperature of the second component of the transverse threads (3) and that is not soluble in matrix resins of epoxy, cyanate ester, or benzoxazine or mixtures of these matrix resins, wherein the second polymer component has a lower melting temperature than the first polymer component.

14. Method according to any of the preceding claims, **characterised in that** carbon fibre threads, glass fibre threads or aramid threads, or highly stretched UHMW threads are used as the multifilament reinforcement threads (2).

15. Method according to any of the preceding claims, **characterised in that** a carbon fibre thread having a strength of at least 5000 MPa measured according to JIS R-7608 and a tensile modulus of at least 260 GPa measured according to JIS R-7608 is used as the multifilament reinforcement thread.

16. Method according to any of the preceding claims, **characterised in that** the at least one flat layer of mutually parallel juxtaposed multifilament reinforcement threads (2) has a curved contour, in which the multifilament reinforcement threads (2) are arranged parallel to a circumferential direction of the curved contour and each multifilament reinforcement thread (2) runs on its own trajectory associated with the circumferential direction of the curved contour, and the trajectories of the individual multifilament reinforcement threads (2) have a common centre of curvature.

17. Fibre preform for producing composite components, **characterised in that** it comprises a textile unidirectional fabric (1) produced according to any of claims 1 to 16.

## Revendications

1. Procédé de fabrication d'un tissu textile unidirectionnel (1), dans lequel au moins une couche plane en fils de renforcement multifilaments (2) agencés parallèlement les uns à côté des autres sont tissés ensemble via des fils transversaux (3), dans lequel les fils voisins des fils de renforcement multifilaments (2) à l'intérieur d'une couche se trouvent principalement en contact direct ensemble, dans lequel des fils transversaux avec une structure âme-gaine sont utilisés comme fils transversaux (3), dans lequel les fils transversaux (3) présentent un premier composant formant la gaine et un second composant formant l'âme, dans lequel le premier composant présente une température de fusion inférieure au second composant, le premier composant est un matériau polymère thermoplastique fusible, et les fils de renforcement multifilaments agencés les uns à côté des autres sont reliés ensemble par collage par fusion via le premier composant des fils transversaux (3), dans lequel les fils transversaux présentent une densité linéaire de 10 à 40 tex, mesurée selon la norme EN ISO 2060:1995, des canaux (4) sont formés par l'entrelacement des fils transversaux (3) avec les fils de renforcement multifilaments (2) agencés les uns à côté des autres à l'intérieur de la couche plane de fils de renforcement multifilaments (2), par lequel une perméabilité de 10 à 600 l/dm²/min, mesurée selon la norme EN ISO 9237, peut être ajustée, dans lequel les canaux (4) n'apparaissent que très localement à des points de croisement entre le fil de renforcement multifilaments (2) et le fil transversal (3) par l'entrelacement.

2. Procédé selon la revendication 1, **caractérisé en ce qu'**un non-tissé en matériau polymère thermoplastique est agencé sur l'au moins une couche plane des fils de renforcement multifilaments (2), lequel est relié de manière collante à la couche plane des fils de renforcement multifilaments (2).

3. Procédé selon au moins l'une quelconque des revendications précédentes, **caractérisé en ce qu'**une perméabilité supérieure à 25 l/dm²/min, de préférence supérieure à 50 l/dm²/min, est ajustée et/ou les canaux (4) ne sont sensiblement formés que dans la plage d'un point de tissage de l'entrelacement d'un fil de renforcement multifilaments (2) et d'un fil transversal (3).

4. Procédé selon au moins l'une quelconque des revendications précédentes, **caractérisé en ce que** les fils transversaux (3) pour former le tissu textile unidirectionnel avec les fils de renforcement multifilaments sont de préférence tissés en armure sergé ou toile.

5. Procédé selon la revendication 4, **caractérisé en ce qu'**une armure sergé 3/1 avec 0,8 à 3,0 Fd/cm, une armure sergé 3/1 avec 0,8 à 3,0 Fd/cm, une armure sergé 2/1 avec 0,8 à 3,0 Fd/cm, une armure toile 1/1 avec 0,8 à 3,0 Fd/cm et/ou une armure toile 1/1 avec 0,8 à 3,0 Fd/cm est utilisée comme armure.

6. Procédé selon l'une quelconque des revendications précédentes, **caractérisé en ce qu'**un composant avec une température de fusion dans la plage de 70 à 150 °C est utilisé pour le premier composant des fils transversaux (3).

7. Procédé selon la revendication 6, **caractérisé en ce qu'**un homopolymère de polyamide ou un copolymère de polyamide ou un mélange d'homopolymères de polyamide et/ou de copolymères de polyamide est utilisé comme premier composant des fils transversaux (3).

8. Procédé selon l'une quelconque des revendications précédentes, **caractérisé en ce qu'**un composant avec une température de fusion supérieure à 200 °C est utilisé comme second composant des fils transversaux (3).

9. Procédé selon l'une quelconque des revendications précédentes, **caractérisé en ce que** du verre ou un polyester est utilisé comme second composant des fils transversaux (3).

10. Procédé selon l'une quelconque des revendications précédentes, **caractérisé en ce que** des fils transversaux (3) avec une densité linéaire dans la plage de 15 à 35 tex, de préférence de 20 à 25 tex, mesurée selon la norme EN ISO 2060:1995, sont utilisés.

11. Procédé selon la revendication 2, **caractérisé en ce qu'**un non-tissé d'un grammage dans la plage de 3 à 25 g/m² est utilisé comme non-tissé.

12. Procédé selon la revendication 2, **caractérisé en ce qu'**un non-tissé avec une épaisseur, mesurée perpendiculairement à la direction d'étalement du non-tissé, inférieure à 60 µm, de préférence inférieure à 30 µm et le plus préférentiellement inférieure à 10 µm, mesurée selon la norme DIN ISO 9073-2, est utilisé comme non-tissé.

13. Procédé selon la revendication 2, **caractérisé en ce qu'**un non-tissé avec un premier composant polymère et un second composant polymère est utilisé comme non-tissé, dans lequel le premier composant polymère présente une température de fusion inférieure à la température de fusion ou de décomposition du second composant des fils transversaux (3) et qui est insoluble dans les résines matricielles époxy, cyanate ester ou benzoxazine ou dans les mélanges de ces résines matricielles, dans lequel le second composant polymère présente une température de fusion inférieure à celle du premier composant polymère.

14. Procédé selon l'une quelconque des revendications précédentes, **caractérisé en ce que** des fils de fibre de carbone, de fibre de verre ou d'aramide ou des fils de polyéthylène UHMW hautement étirés sont utilisés comme fils de renforcement multifilaments (2).

15. Procédé selon l'une quelconque des revendications précédentes, **caractérisé en ce qu'**un fil de fibre de carbone avec une résistance d'au moins 5 000 MPa, mesurée selon la norme JIS-R-7608, et un module de traction d'au moins 260 GPa, mesuré selon la norme JIS-R-7608, est utilisé comme fil de renforcement multifilaments.

16. Procédé selon l'une quelconque des revendications précédentes, **caractérisé en ce que** l'au moins une couche plane de fils de renforcement multifilaments (2) agencés parallèlement les uns à côté des autres présente un contour courbé, dans lequel les fils de renforcement multifilaments (2) sont agencés parallèlement à une direction circonférentielle du contour courbé et chaque fil de renforcement multifilaments (2) s'étend sur sa propre courbe de trajectoire associée à la direction circonférentielle du contour courbé et les courbes de trajectoire des fils de renforcement multifilaments (2) respectifs présentent un centre de courbure commun.

17. Préforme fibreuse pour la fabrication de composants en matériaux composites, **caractérisée en ce qu'**elle comprend un tissu textile unidirectionnel (1) fabriqué selon l'une quelconque des revendications 1 à 16.
